(19) Europäisches Patentamt
European Patent Office
Office européen des brevets

(11) EP 3 366 709 A1

(12) **EUROPEAN PATENT APPLICATION**

(43) Date of publication:
**29.08.2018 Bulletin 2018/35**

(21) Application number: **17157801.6**

(22) Date of filing: **24.02.2017**

(51) Int Cl.:
*C08F 212/14* (2006.01) *C08F 236/06* (2006.01)
*C08F 230/02* (2006.01) *C08C 19/25* (2006.01)
*C08F 2/38* (2006.01) *C08L 9/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ARLANXEO Deutschland GmbH**
**41540 Dormagen (DE)**

(72) Inventors:
- **Rünzi, Thomas**
  **50733 Köln (DE)**
- **Lucassen, Alex**
  **41539 Dormagen (DE)**
- **Steinhauser, Norbert**
  **41539 Dormagen (DE)**
- **Gross, Thomas**
  **52589 Wülfrath (DE)**

(74) Representative: **Wichmann, Birgid**
**LANXESS Deutschland GmbH**
**LEX-IPR**
**Kennedyplatz 1**
**50569 Köln (DE)**

(54) **IN-CHAIN PHOSPHINE- AND PHOSPHONIUM- CONTAINING DIENE-POLYMERS**

(57) In-chain phosphine- and/or phosphonium- containing diene-polymers, the preparation and use thereof, as well as vulcanizable rubber compounds comprising such polymers, and their use for the production of moldings in particular in the production of tires.

EP 3 366 709 A1

## Description

In-chain phosphine- and phosphonium- containing diene-polymers, the preparation and use thereof, as well as vulcanizable rubber compounds comprising such polymers, and their use for the production of moldings in particular in the production of tires

Important properties desirable in tyre treads include good adhesion on dry and wet surfaces, low rolling resistance and high abrasion resistance. It is very difficult to improve the skid resistance of a tyre without simultaneously worsening the rolling resistance and abrasion resistance. A low rolling resistance is important for low fuel consumption, and high abrasion resistance is a crucial factor for a long service life of the tyre.

Wet skid resistance and rolling resistance of a tyre tread depend largely on the dynamic/mechanical properties of the rubbers which are used in the blend production. To lower the rolling resistance, rubbers with a high resilience at higher temperatures (60°C to 100°C) are used for the tyre tread. On the other hand, for improving the wet skid resistance, rubbers having a high damping factor at low temperatures (0 to 23°C) or low resilience in the range of 0°C to 23°C is advantageous. In order to fulfil this complex profile of requirements, mixtures of various rubbers are used in the tread. Usually, mixtures of one or more rubbers having a relatively high glass transition temperature, such as styrene-butadiene rubber, and one or more rubbers having a relatively low glass transition temperature, such as polybutadiene having a high 1,4-cis content or a styrene-butadiene rubber having a low styrene and low vinyl content or a polybutadiene prepared in solution and having a moderate 1,4-cis and low vinyl content, are used.

Anionically polymerized solution rubbers containing double bonds, such as solution polybutadiene and solution styrene-butadiene rubbers, have advantages over corresponding emulsion rubbers in terms of production of tyre treads with low rolling resistance. The advantages lie, inter alia, in the controllability of the vinyl content and of the associated glass transition temperature and molecular branching. In practical use, these give rise to particular advantages in the relationship between wet skid resistance and rolling resistance of the tyre.

The introduction of functional groups into the polymer chain enables physical or chemical attachment to the filler surface. This restricts the mobility thereof and hence reduces energy dissipation under dynamic stress on the tyre tread. At the same time, these functional groups improve the dispersion of the filler in the tyre tread, which can lead to a weakening of the filler network and hence to further lowering of the rolling resistance.

For this purpose, numerous methods for end chain functionalization have been developed. For example, EP0180141A1 describes the use of 4,4'-bis(dimethylamino)benzophenone or N-methylcaprolactam as functionalizing reagents. The use of ethylene oxide and N-vinylpyrrolidone is also known from EP0864606A1. A number of further possible functionalizing reagents are detailed in US4417029. Methods for introducing functional groups at the start of polymer chains by means of functional anionic polymerization initiators are described, for example, in EP0513217A1 and EP0675140A1 (initiators with a protected hydroxyl group), US20080308204A1 (thioether-containing initiators) and in US5792820, EP0590490A1 and EP0594107A1 (alkali metal amides of secondary amines as polymerization initiators).All these methods are restricted to the introduction of two functional groups per polymer chain, while in-chain functionalization allows for several functional groups per polymer chain. Most strategies for in-chain functionalization are based on a second post-polymerization reaction step. This post-polymerization reaction requires certain activators such as Ruthenium based catalysts or free-radical initiators which increase the costs of production or which suffer from undesirable side reactions such as, for example, gelation. An overview of such reactions in reviewed in Chem. Rev. 1995, 95, 381-398 from Martin P. McGrath, Erik D. Sail and Samuel J. Tremont.

A direct copolymerization of a phosphine-containing monomer is reported in WO 2013/166124 A1. Vinyl-diphenyl phosphine is used as comonomer. However, incorporation of the vinyl-diphenylphosphine is less than 70% of the starting amount and the microstructure is negatively affected by the resulting reduction in vinyl content.

An object was therefore to provide polymers which are functionalized by in-chain groups and which do not have the disadvantages of the prior art.

Surprisingly, it has now been found that phosphine and phosphonium based compounds can be used as monomers for polymerization with dienes thereby forming in-chain phosphine-and phosphonium- containing diene-polymers without the need of any activators as described above nor with the other disadvantages of the prior art. It was further surprisingly found that such in-chain phosphine- and phosphonium- containing diene-polymers when used in various tire compounds demonstrate improved dynamic performance properties.

If not otherwise stated herein, it is to be assumed that all patents, patent applications, patent publications and other publications mentioned and cited herein are hereby fully incorporated by reference herein as if set forth in their entirety herein.

There is broadly contemplated in accordance with at least one embodiment of the present invention, an in-chain phosphine- and/or phosphonium- containing diene-polymer, comprising repeating monomeric units of at least one diene and at least one phosphine and/or phosphonium containing monomeric unit according to the formulae B1, B2, and/or B3:

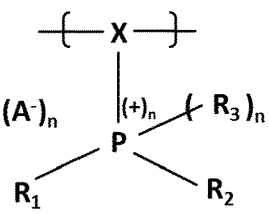

B1

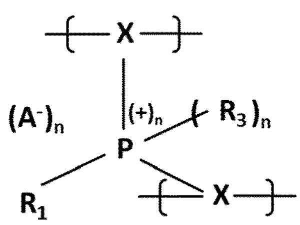

B2

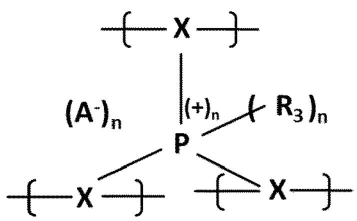

B3

where per formula B1:

n = 0 or 1, and

when n = 0, then

$R^1$, $R^2$ are the same or different and are each an H, a linear and branched alkyl, aryl especially phenyl and alkylated phenyl, benzyl, cycloalkoxy, aryloxy, alkaryloxy, aralkyl or aralkoxy radical which may contain one or more heteratoms, preferably O, N, S or Si

X is the polymerized form of allyl, styryl, methyl styryl, 1,3-pentadienyl, 2-methylene buta-1,3-diene, 1,3-hexadienyl, or mixtures thereof, and

when n = 1, then

$R^1$, $R^2$ are as above,

$R^3$ is H, linear and branched alkyl, aryl preferably phenyl and alkylated phenyl, benzyl, polybutadienyl, polyisoprenyl, polyacryl,

X is the polymerized form of a vinyl, allyl, styryl, methyl styryl, 1,3-pentadienyl, 2-methylene buta-1,3-diene, 1,3-hexadienyl and mixtures thereof $R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si, and

$A^-$ is $F^-$, $Cl^-$, $Br^-$, $J^-$, $OH^-$, $SH^-$, $BF_4^-$ ,1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$,

where per formula B2:

n = 0 or 1, and

$R^1$ is are the same or different and are each an H, a linear and branched alkyl, aryl especially phenyl and alkylated phenyl, benzyl, cycloalkoxy, aryloxy, alkaryloxy, aralkyl or aralkoxy radical which may contain one or more heteratoms, preferably O, N, S or Si,

$R^3$ is H, linear and branched alkyl, aryl preferably phenyl and alkylated phenyl, benzyl, polybutadienyl, polyisoprenyl, polyacryl

X is the polymerized form of a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si, and

$A^-$ is $F^-$, $Cl^-$, $Br^-$, J-, OH-, $SH^-$, $BF_4^-$, 1/2 $SO_4^{2-}$, $HSO_4^-$, $HSO_3^-$, $NO_2^-$, $NO_3^-$, carboxylate $R-C(O)O^-$, dialkyl phosphate $(RO)_2P(O)O^-$, dialkyl dithiophosphate $(RO)_2P(S)S^-$, dialkyl phosphorothioate $(RO)_2P(S)O^-$,

where per formula B3:

n = 0 or 1, and

$R^3$ is H, linear and branched alkyl, aryl preferably phenyl and alkylated phenyl, benzyl, polybutadienyl, polyisoprenyl, polyacryl

X is the polymerized form of a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si, and

$A^-$ is $F^-$, $Cl^-$, $Br^-$, $J^-$, $OH^-$, $SH^-$, $BF_4^-$, 1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$.

In an embodiment, the at least one phosphine and/or phosphonium containing monomeric unit is styryl(diphenyl)phosphine and/or its corresponding alkyl-phosphonium salt. Preferably more than 70% of the starting amount of the at least one phosphine and/or phosphonium containing monomeric unit is incorporated into the in-chain phosphine- and/or phosphonium-containing diene-polymer.

In another embodiment of the present invention there is a process for forming the in-chain phosphine- and/or phosphonium- containing diene-polymer, comprising the steps of polymerizing at least one diene and at least one phosphine or phosphonium containing monomer according to the formulae A1, A2, and/or A3

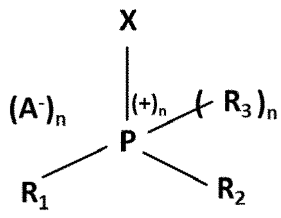

A1

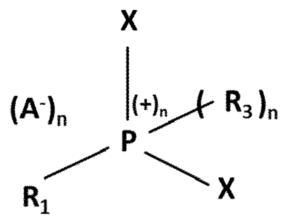

A2

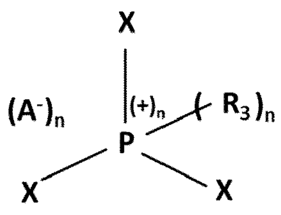

A3

where per formula A1,

n = 0 or 1, and

when n = 0, then

$R^1$, $R^2$ are the same or different and are each an H, a linear and branched alkyl, aryl especially phenyl and alkylated phenyl, benzyl, cycloalkoxy, aryloxy, alkaryloxy, aralkyl or aralkoxy radical which may contain one or more heteratoms, preferably O, N, S or Si

X is allyl, styryl, methyl styryl, 1,3-pentadienyl, 2-methylene buta-1,3-diene, 1,3-hexadienyl, or mixtures thereof, and

when n = 1, then

$R^1$, $R^2$ are as above,

$R^3$ is H, linear and branched alkyl, aryl preferably phenyl and alkylated phenyl, benzyl, polybutadienyl, polyisoprenyl, polyacryl,

X is a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms,

preferably O, N, S or Si, and

$A^-$ is $F^-$, $Cl^-$, $Br^-$, $J^-$, $OH^-$, $SH^-$, $BF_4^-$,1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$, and

where per formula A2:

n = 0 or 1, and

$R^1$ is are the same or different and are each an H, a linear and branched alkyl, aryl especially phenyl and alkylated phenyl, benzyl, cycloalkoxy, aryloxy, alkaryloxy, aralkyl or aralkoxy radical which may contain one or more heteratoms, preferably O, N, S or Si,

$R^3$ is H, linear and branched alkyl, aryl preferably phenyl and alkylated phenyl, benzyl, polybutadienyl, polyisoprenyl, polyacryl

X is a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si,

$A^-$ is $F^-$, $Cl^-$, $Br^-$, J-, OH-, $SH^-$, $BF_4^-$, 1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$, and

where for formula A3:

n = 0 or 1, and

$R^3$ is H, linear and branched alkyl, aryl preferably phenyl and alkylated phenyl, benzyl, polybutadienyl, polyisoprenyl, polyacryl

X is a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si, and

$A^-$ is $F^-$, $Cl^-$, $Br^-$, $J^-$, $OH^-$, $SH^-$, $BF_4^-$, 1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$.

In one embodiment, the in-chain phosphine- and/or phosphonium- containing diene-polymer additionally comprises repeating monomeric units of a vinylaromatic compound, preferably styrene. In another embodiment the diene is butadiene or isoprene, preferably butadiene. In a particularly preferred embodiment the in-chain phosphine- and/or phosphonium- containing diene-polymer comprises polybutadiene as polymerized diene and polystyrene as further polymerized monomer.

In a further embodiment of the present invention the in-chain phosphine- and/or phosphonium- containing diene-polymer is end-chain functionalized thereby comprises one or more end-chain functional groups. Such end chain functionalization is performed after the polymerization with the at least one diene and at least one phosphine or phosphonium containing monomer according to the formulae A1, A2, and/or A3 above. Preferably the end-chain functional groups are selected from silane-containing carbinol groups of the formula (I)

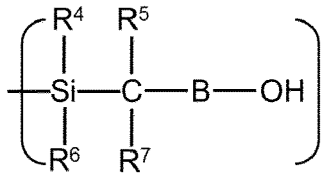

(I)

where

| | |
|---|---|
| $R^4$, $R^5$, $R^6$, $R^7$ | are identical or different and are H, alkyl moieties, cycloalkyl moieties, aryl moieties, alkaryl moieties and aralkyl moieties, where these can comprise heteroatoms such as O, N, S, Si, |
| B | is a divalent organic moiety which can comprise, alongside C and H, heteroatoms such as O, N, S, Si. |

The end-chain functional groups can also be present in the form of metal salts according to the formula (II):

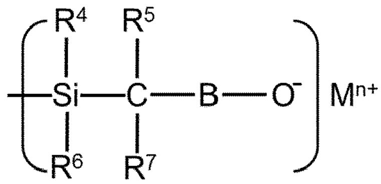

(II)

where

| | |
|---|---|
| $R^4$, $R^5$, $R^6$, $R^7$ | are identical or different and are H, alkyl moieties, cycloalkyl moieties, aryl moieties, alkaryl moieties and aralkyl moieties, where these can comprise heteroatoms such as O, N, S, Si, |
| B | is a divalent organic moiety which can comprise, alongside C and H, heteroatoms such as O, N, S, Si, |
| n | is an integer from 1 to 4, |
| M | is a metal or semimetal of valency from 1 to 4, preferably Li, Na, K, Mg, Ca, Fe, Co, Ni, Al, Nd, Ti, Si, Sn. |

Preferred (co)monomers are styryl(diphenyl)phosphine and its corresponding alkyl-phosphonium salt.

In an embodiment the end-chain functionalizing reagents contain one or more heteroatoms, preferably O, N, S, Si or Sn. Preferably, said end-chain functionalizing reagents are 1-oxa-2-silacycloalkanes. Examples of 1-oxa-2-silacycloalkanes for introduction of functional groups at the end of the polymer chains are 2,2-dimethyl-1-oxa-2-silacyclohexane, 2,2-diethyl-1-oxa-2-silacyclohexane, 2,2-dipropyl-1-oxa-2-silacyclohexane, 2-methyl-2-phenyl-1-oxa-2-silacyclohexane, 2,2-diphenyl-1-oxa-2-silacyclohexane, 2,2,5,5-tetramethyl-1-oxa-2-silacyclohexane, 2,2,3-trimethyl-1-oxa-2-silacyclohexane, 2,2-dimethyl-1-oxa-2-silacyclopentane, 2,2,4-trimethyl-1-oxa-2-silacyclopentane, 2,2-dimethyl-1,4-dioxa-2-silacyclohexane, 2,2,5,5-tetramethyl-1,4-dioxa-2,5-disilacyclohexane, 2,2,4-trimethyl-[1,4,2]oxazasilinane, benzo-2,2-dimethyl-1,4-dioxa-2-silacyclohexane, benzo-2,2,4-trimethyl-1-oxa-4-aza-2-silacyclohexane. It has been found that the inventive functionalized diene polymers may be prepared by reaction of reactive ends of polymer chains with 1-oxa-2-silacycloalkanes and optional subsequent protonation of the alkoxide end group to give the alcohol.

In another embodiment of the invention, there is a vulcanizable rubber composition, comprising an in-chain phosphine- and/or phosphonium- containing diene-polymer as provided above, a rubber, optionally a filler, optionally a coupling agent, and at least one crosslinking system comprising at least one crosslinker and optionally one or more crosslinking accelerators.

In an embodiment, there is additionally process for producing the aforementioned vulcanizates as well as the vulcanizates thereby obtained.

For a better understanding of the present invention, together with other and further features and advantages thereof, reference is made to the following description, taken in conjunction with the accompanying drawings, and the scope of the invention will be pointed out in the appended claims.

Preferred polymers for producing the in-chain phosphine- and phosphonium- containing diene-polymers according to the invention are diene polymers and diene copolymers obtainable via copolymerization of dienes with vinylaromatic monomers.

Dienes used are preferably 1,3-butadiene, isoprene, 1,3-pentadiene, 2,3-dimethylbutadiene, 1-phenyl-1,3-butadiene and/or 1,3-hexadiene. It is particularly preferable to use 1,3-butadiene and/or isoprene.

The vinylaromatic comonomers may, for example, be styrene, o-, m- and/or p-methylstyrene, p-*tert*-butylstyrene, $\alpha$-methylstyrene, vinylnaphthalene, divinylbenzene, trivinylbenzene and/or divinylnaphthalene. Particular preference is given to using styrene.

These polymers are preferably prepared by anionic solution polymerization or by polymerization by means of coordination catalysts. In this context, coordination catalysts are understood to mean Ziegler-Natta catalysts or monometallic catalyst systems. Preferred coordination catalysts are those based on Ni, Co, Ti, Zr, Nd, V, Cr, Mo, W or Fe.

Initiators for anionic solution polymerization are those based on alkali metals or alkaline earth metals, for example methyllithium, ethyllithium, isopropyllithium, *n*-butyllithium, *sec*-butyllithium, pentyllithium, *n*-hexyllithium, cyclohexyllithium, octyllithium, decyllithium, 2-(6-lithio-*n*-hexoxy)tetrahydropyran, 3-(*tert*-butyldimethylsiloxy)-1-propyllithium, phenyllithium, 4-butylphenyllithium, 1-naphthyllithium, p-tolyllithium and allyllithium compounds derived from tertiary N-allylamines, such as [1-(dimethylamino)-2-propenyl]lithium, [1-[bis(phenylmethyl)amino]-2-propenyl]lithium, [1-(diphenylamino)-2-propenyl]lithium, [1-(1-pyrrolidinyl)-2-propenyl]lithium, lithium amides of secondary amines, such as lithium pyrrolidide, lithium piperidide, lithium hexamethyleneimide, lithium 1-methylimidazolidide, lithium 1-methylpiperazide, lithium morpholide, lithium dicyclohexylamide, lithium dibenzylamide, lithium diphenylamide. These allyllithium compounds and these lithium amides can also be prepared *in situ* by reaction of an organolithium compound with the respective tertiary N-allylamines or with the respective secondary amines. In addition, it is also possible to use di- and polyfunctional organolithium compounds, for example 1,4-dilithiobutane, dilithium piperazide. Preference is given to using *n*-butyllithium and *sec*-butyllithium.

In addition, it is possible to use the known randomizers and control agents for the microstructure of the polymer, for example diethyl ether, di-*n*-propyl ether, diisopropyl ether, di-*n*-butyl ether, ethylene glycol dimethyl ether, ethylene glycol diethyl ether, ethylene glycol di-*n*-butyl ether, ethylene glycol di-*tert*-butyl ether, diethylene glycol dimethyl ether, diethylene glycol diethyl ether, diethylene glycol di-*n*-butyl ether, diethylene glycol di-*tert*-butyl ether, 2-(2-ethoxyethoxy)-2-methylpropane, triethylene glycol dimethyl ether, tetrahydrofuran, ethyl tetrahydrofurfuryl ether, hexyl tetrahydrofurfuryl ether, 2,2-bis(2-tetrahydrofuryl)propane, dioxane, trimethylamine, triethylamine, N,N,N',N'-tetramethylethylenediamine, N-methylmorpholine, N-ethylmorpholine, 1,2-dipiperidinoethane, 1,2-dipyrrolidinoethane, 1,2-dimorpholinoethane and potassium and sodium salts of alcohols, phenols, carboxylic acids, sulphonic acids.

Such solution polymerizations are known and are described, for example, in I. Franta, Elastomers and Rubber Compounding Materials; Elsevier 1989, pages 113 - 131, in Houben-Weyl, Methoden der Organischen Chemie [Methods of Organic Chemistry], Thieme Verlag, Stuttgart, 1961, volume XIV/1 pages 645 to 673 or in volume E 20 (1987), pages 114 to 134 and pages 134 to 153, and in Comprehensive Polymer Science, Vol. 4, Part II (Pergamon Press Ltd., Oxford 1989), pages 53-108.

The preparation of the preferred polymers consisting of at least one diene, at least one phosphine- or phosphonium comonomer and optionally another vinyl monomer such as e.g. styrene preferably takes place in a solvent. The solvents used for the polymerization are preferably inert aprotic solvents, for example paraffinic hydrocarbons such as isomeric butanes, pentanes, hexanes, heptanes, octanes, decanes, cyclopentane, methylcyclopentane, cyclohexane, methylcyclohexane, ethylcyclohexane or 1,4-dimethylcyclohexane, or alkenes such as 1-butene, or aromatic hydrocarbons such as benzene, toluene, ethylbenzene, xylene, diethylbenzene or propylbenzene. These solvents can be used individually or in combination. Preference is given to cyclohexane, methylcyclopentane and n-hexane. Blending with polar solvents is likewise possible.

The amount of solvent in the process according to the invention is typically in the range from 100 to 1000 g, preferably in the range from 200 to 700 g, based on 100 g of the total amount of monomer used. However, it is also possible to polymerize the monomers used in the absence of solvents.

The polymerization can be performed in such a way that the monomers and the solvent are initially charged and then the polymerization is started by adding the initiator or catalyst. Polymerization in a feed process is also possible, in which the polymerization reactor is filled by addition of monomers and solvent, the initiator or catalyst being initially charged or added with the monomers and the solvent. Variations such as initial charging of the solvent in the reactor, addition of the initiator or catalyst and then addition of the monomers, are possible. In addition, the polymerization can be operated in a continuous mode. Further addition of monomer and solvent during or at the end of the polymerization is possible in all cases.

The in-chain phosphine- and/or phosphonium- containing diene-polymer can be further functionalized with filler interacting moieties which can be in alpha and/or omega position. Various methods exist for end-chain functionalization of polymers as known in the art. For example, one method of end-chain functionalization of polymers uses doubly functionalized reagent, wherein polar functional groups react with the polymer and, using a second polar functional group in the molecule, interact with for example filler, as described by way of example in WO 01/34658 or US-A 6992147. Methods for introducing functional groups at the start of polymer chains by means of functional anionic polymerization initiators are described, for example, in EP 0 513 217 B1 and EP 0 675 140 B1 (initiators with a protected hydroxyl group), US 2008/0308204 A1 (thioether-containing initiators) and in US 5,792,820 and EP 0 590 490 B1 (alkali metal amides of secondary amines as polymerization initiators). More particularly, EP 0 594 107 B1 describes the *in situ* use of secondary amines as functional polymerization initiators, but does not describe the chain end functionalization of the polymers. In addition, numerous methods have been developed for introduction of functional groups at the end of polymer chains. For example, EP 0 180 141 A1 describes the use of 4,4'-bis(dimethylamino)benzophenone or N-methylcaprolactam as functionalization reagents. The use of ethylene oxide and N-vinylpyrrolidone is known from EP 0 864 606 A1. A number of further possible functionalization reagents are detailed in U.S: Pat. Nos. 4,906,706 and 4,417,029.

The polymerization time may vary within wide limits from a few minutes to a few hours. Typically, the polymerization is performed within a period of 10 minutes up to 8 hours, preferably 20 minutes to 4 hours. It can be performed either at standard pressure or at elevated pressure (from 1 to 10 bar).

The average (number average) molar masses of the polymers according to the invention are preferably from 10 000 to 2 000 000 g/mol, preferably from 100 000 to 1 000 000 g/mol, their glass transition temperatures being from -110°C to +20°C, preferably from -110°C to 0°C, and their Mooney viscosities [ML 1+4 (100°C)] being from 10 to 200 Mooney units, preferably from 30 to 150 Mooney units.

The conventional antioxidants for the polymers of the invention, such as sterically hindered phenols, aromatic amines, phosphites, and thioethers, preferably aromatic amines, which antioxidants are preferably added prior to or during the work-up of the in-chain phosphine-and/or phosphonium- containing diene-polymers. It is also possible to add the conventional extender oils used for diene rubbers, e.g. DAE (Distillate Aromatic Extract) oils, TDAE (Treated Distillate Aromatic Extract) oils, MES (Mild Extraction Solvate) oils, RAE (Residual Aromatic Extract) oils, TRAE (Treated Residual Aromatic Extract) oils, and naphthenic and heavy naphthenic oils. It is also possible to add fillers, such as carbon black and silica, and rubbers and rubber auxiliaries.

The solvent can be removed from the polymerization process by the conventional methods, such as distillation, steam stripping, or application of a vacuum, optionally at elevated temperature.

The invention further provides the use of the in-chain phosphine- and phosphonium-containing diene-polymers according to the invention for producing vulcanizable rubber compositions. It is preferable that the vulcanizable rubber compositions comprise further rubbers, fillers, rubber chemicals, processing aids and extender oils. Examples of additional rubbers are natural rubber and also synthetic rubbers. The amount of these, to the extent that they are present, is usually in the range from 0.5 to 95% by weight, preferably from 10 to 80% by weight, based on the total amount of polymer in the mixture. The amount of rubbers additionally added in turn depends on the respective intended use of the mixtures according to the invention.

A list of synthetic rubbers known from the literature is given here by way of example. They comprise inter alia

| | |
|---|---|
| BR | Polybutadiene |
| ABR | Butadiene/C1-C4-alkyl acrylate copolymers |
| IR | Polyisoprene |
| ESBR | Styrene-butadiene copolymers having from 1-60% by weight styrene contents, preferably from 20-50% by weight, produced via emulsion polymerization |
| SSBR | Styrene-butadiene copolymers having from 1-60% by weight styrene contents, preferably from 15-45% by weight, produced via solution polymerization |
| IIR | Isobutylene-isoprene copolymers |
| NBR | Butadiene-acrylonitrile copolymers having from 5 to 60% by weight acrylonitrile contents, preferably from 10-40% by weight |
| HNBR | Partially hydrogenated or fully hydrogenated NBR rubber |
| EPDM | Ethylene-propylene-diene terpolymers |

and also mixtures of the said rubbers. Materials of interest for producing motor vehicle tyres are in particular natural rubber, ESBR and SSBR with glass transition temperature above - 60°C, polybutadiene rubber having high cis-content (> 90%), which has been produced using catalysts based on Ni, Co, Ti or Nd, and also polybutadiene rubber having up to 80% vinyl content, and also mixtures of these.

Fillers that can be used for the rubber compositions according to the invention are any of the known fillers used in the rubber industry. These comprise active and inert fillers. Examples that may be mentioned are:

- fine-particle silicas, produced by way of example via precipitation from solutions of silicates or via flame hydrolysis of silicon halides with specific surface areas of from 5 to 1000 m2/g (BET surface area), preferably from 20 to 400 m2/g, and with primary particle sizes of from 10 to 400 nm. The silicas can, if appropriate, also take the form of mixed oxides with other metal oxides, such as oxides of Al, of Mg, of Ca, of Ba, of Zn, of Zr, or of Ti;

- synthetic silicates, such as aluminium silicate, or alkaline earth metal silicate, e.g. magnesium silicate or calcium

silicate, with BET surface areas of from 20 to 400 m2/g and with primary particle diameters of from 10 to 400 nm;

- natural silicates, such as kaolin and any other naturally occurring form of silica;
- glass fibres and glass-fibre products (mats, strands), or glass microbeads;
- metal oxides, such as zinc oxide, calcium oxide, magnesium oxide, or aluminium oxide;
- metal carbonates, such as magnesium carbonate, calcium carbonate, or zinc carbonate;
- metal hydroxides, e.g. aluminum hydroxide or magnesium hydroxide;
- metal sulphates, such as calcium sulphate or barium sulphate;
- carbon blacks: The carbon blacks for use here are those prepared by the flame process, channel process, furnace process, gas process, thermal process, acetylene process or arc process, their BET surface areas being from 9 to 200 m2/g, e.g. SAF, ISAF-LS, ISAF-HM, ISAF-LM, ISAF-HS, CF, SCF, HAF-LS, HAF, HAF-HS, FF-HS, SPF, XCF, FEF-LS, FEF, FEF-HS, GPF-HS, GPF, APF, SRF-LS, SRF-LM, SRF-HS, SRF-HM and MT carbon blacks, or the following types according to ASTM classification: N110, N219, N220, N231, N234, N242, N294, N326, N327, N330, N332, N339, N347, N351, N356, N358, N375, N472, N539, N550, N568, N650, N660, N754, N762, N765, N774, N787 and N990 carbon blacks;
- rubber gels, in particular those based on polybutadiene, styrene-butadiene copolymers and/or polychloroprene with particle sizes from 5 to 1000 nm.

Preferred fillers used are fine-particle silicas and/or carbon blacks.

The fillers mentioned can be used alone or in a mixture. In one particularly preferred embodiment, the rubber compositions comprise, as fillers, a mixture composed of pale-coloured fillers, such as fine-particle silicas, and of carbon blacks, where the mixing ratio of pale-coloured fillers to carbon blacks is from 0.01:1 to 50:1, preferably from 0.05:1 to 20:1.

The amounts used of the fillers here are in the range from 10 to 500 parts by weight based on 100 parts by weight of rubber. It is preferable to use from 20 to 150 parts by weight.

In another embodiment of the invention, the rubber compositions also comprise rubber auxiliaries, which by way of example improve the processing properties of the rubber compositions, or serve for the crosslinking of the rubber compositions, or improve the physical properties of the vulcanizates produced from the rubber compositions of the invention, for the specific intended purpose of the said vulcanizates, or improve the interaction between rubber and filler, or serve for the coupling of the rubber to the filler.

Examples of rubber auxiliaries are crosslinking agents, e.g. sulphur or sulphur-donor compounds, and also reaction accelerators, antioxidants, heat stabilizers, light stabilizers, antiozone agents, processing aids, plasticizers, tackifiers, blowing agents, dyes, pigments, waxes, extenders, organic acids, silanes, retarders, metal oxides, extender oils, e.g. DAE (Distillate Aromatic Extract) oil, TDAE (Treated Distillate Aromatic Extract) oil, MES (Mild Extraction Solvate) oil, RAE (Residual Aromatic Extract) oil, TRAE (Treated Residual Aromatic Extract) oil, and naphthenic and heavy naphthenic oils, and also activators.

The total amount of rubber auxiliaries is in the range from 1 to 300 parts by weight, based on 100 parts by weight of entirety of rubber. It is preferable to use from 5 to 150 parts by weight of rubber auxiliaries.

The invention also provides a process for the production of the rubber compositions of the invention, according to which at least one of the in-chain phosphine- and phosphonium-containing diene-polymers according to the invention, optionally with further rubbers, fillers and rubber auxiliaries, in the amounts mentioned above, is/are mixed in a mixing apparatus at temperatures from 20 - 220°C.

The vulcanizable rubber compositions can be produced in a single-stage or a multistage process, preference being given to 2 to 3 mixing stages. It is therefore possible by way of example that the addition of sulphur and accelerator takes place in a separate mixing stage, e.g. on a roll, preference being given here to temperatures in the range from 30°C to 90°C. It is preferable that the addition of sulphur and accelerator takes place in the final mixing stage or per a milling stage.

Examples of assemblies suitable for producing the vulcanizable rubber compositions are rolls, kneaders, internal mixers and mixing extruders.

The invention therefore further provides vulcanizable rubber compositions comprising in-chain phosphine- and phosphonium- containing diene-polymers.

The invention further provides the use of the vulcanizable rubber compositions according to the invention for

producing rubber vulcanizates, especially for producing tyres, in particular tyre treads, where these have particularly low rolling resistance with high wet skid resistance.

The vulcanizable rubber compositions according to the invention are also suitable for producing mouldings, e.g. for the production of cable sheathing, hoses, drive belts, conveyer belts, roll coverings, shoe soles, sealing rings and damping elements.Although the preferred embodiments of the present invention are described herein, it is to be understood that the invention is not limited to that precise embodiment, and that various other changes and modifications may be affected therein by one skilled in the art without departing from the scope or spirit of the invention.

As used in this description and the appended claims, the singular forms "a," "an," and "the" include plural referents unless the content clearly dictates otherwise.

The following examples are illustrative of a practice of the invention, but are not meant to be considered as limiting the scope of the invention.

EXAMPLES

The following properties were determined in accordance with the stated standards:

DIN 52523/52524 Mooney viscosity $M_L(1+4)_{100°C}$

DIN 53505: Shore A hardness

DIN 53512: rebound resilience at 60°C

DIN 53504: tensile test

DIN53513: dynamic damping via Eplexor equipment - Eplexor equipment (Eplexor 500 N) from Gabo-Testanlagen GmbH, Ahlden, Germany was used to determine dynamic properties (temperature dependency of storage modulus E' in the temperature range from -60°C to 0°C and also tan $\delta$ at 60°C). The values were determined in accordance with DIN53513 at 10 Hz on Ares strips in the temperature range from -100°C to +100°C at a heating rate of 1 K/min.

The method was used to obtain the following variables, the terminology here being in accordance with ASTM 5992-96: tan $\delta$ (60°C): loss factor (E"/E') at 60°C, tan $\delta$ (60°C) is a measure of hysteresis loss from the tire under operating conditions. As tan $\delta$ (60°C) decreases, the rolling resistance of the tire decreases.

DIN 53513-1990: Elastic properties - An MTS elastomer test system (MTS Flex Test) from MTS was used to determine the elastic properties. The measurements were carried out in accordance with DIN53513-1990 on cylindrical samples (2 samples each 20 x 6 mm) with a total 2 mm compression at a temperature of 60°C and a measurement frequency of 1 Hz in the range of amplitude sweep from 0.1 to 40%.The method was used to obtain the following variables, the terminology here being in accordance with ASTM 5992-96: G* (15%): dynamic modulus at 15% amplitude sweep; tan $\delta$ (max): maximum loss factor (G"/G') of entire measuring range at 60°C.The relative proportions of 1,4-trans-, 1,2-vinyl- and 1,4-cis-butadiene, and styrene units were determined on the basis of the measurement of the relative absorptions of 1,4-trans-, 1,2-vinyl- and 1,4-cis-butadiene, and styrene bands in the IR spectrum of polymer films. The method is calibrated with rubber samples having a microstructure known accurately from NMR studies. The figures in % by weight are based only on the incorporated units in the rubber and together add up to 100% by weight.

The amount of phosphine or phosphonium containing monomeric unit of the polymer is measured according to inductively coupled plasma optical emission spectrometry (ICP-OES) and reported in percent of the theoretically amount of Phosphorus that could be fully incorporated into the polymer.

Comparative polymer SBR 1: Synthesis of styrene-butadiene copolymer, unfunctionalized

An inertized 20 L reactor was charged with 8500 g of hexane, 1125 g of 1,3-butadiene, 375 g of styrene, 36 mmol of ditetrahydrofurylpropane (DTHFP) and 18 mmol of butyllithium, and the contents were heated to 70°C. Polymerization was effected while stirring for 60 minutes. Subsequently, 18 mmol of 1-octanol were added to cap the anionic ends of the polymer chains, the rubber solution was discharged and stabilized by addition of 0,5 phr of Irganox® 1520 (2,4-bis(octylthiomethyl)-6-methylphenol). The rubber was isolated by precipitation in ethanol and was dried at 65°C under reduced pressure.

$$ML(1+4)100°\ C = 88,1\ MU$$

Microstructure: 53,0 wt-% vinyl; 11,8 wt- % 1,4 cis; 11.3 wt-% 1,4 trans; 24,0 wt-% styrene

Example polymer SBR 2:Synthesis of styrene-butadiene-SDPP terpolymer

An inertized 2 L reactor was charged with 850 g of hexane, 112,5 g of 1,3-butadiene, 37,5 g of styrene, 1,5 g of styryl(diphenyl)phosphine, 5,32 mmol of 2-(2-ethoxyethoxy)-2-methylpropane (BEE) and 1,40 mmol of butyllithium, and the contents were heated to 70°C. Polymerization was effected while stirring for 60 minutes. Subsequently, 1,4 mmol of 1-octanol were added to cap the anionic ends of the polymer chains, the rubber solution was discharged and stabilized by addition of 0,5 phr of Irganox® 1520 (2,4-bis(octylthiomethyl)-6-methylphenol). The rubber was isolated by precipitation in ethanol and was dried at 65°C under reduced pressure.

$$ML(1+4)100^\circ\ C = 85{,}6\ MU$$

Microstructure: 59,6 wt-% vinyl; 8,6 wt- % 1,4 cis; 8,8 wt-% 1,4 trans; 23,0 wt-% styrene

Phosphorus (ICP-OES): 84 %.

Example polymer SBR 3 was prepared analogously to SBR 2 with the 3 g of styryl(diphenyl)phosphine:

$$ML(1+4)100^\circ\ C = 84{,}4\ MU$$

Microstructure: 55,7 wt-% vinyl; 9,0 wt- % 1,4 cis; 10,0 wt-% 1,4 trans; 25,3 wt-% styrene

Phosphorus (ICP-OES): 96 %.

Example polymer SBR 4: Synthesis of omega-functionalized, styrene-butadiene-SDPP terpolymer

An inertized 2 L reactor was charged with 850 g of hexane, 112,5 g of 1,3-butadiene, 37,5 g of styrene, 1,5 g of styryl(diphenyl)phosphine, 7,22 mmol of 2-(2-ethoxyethoxy)-2-methylpropane (BEE) and 1,90 mmol of butyllithium, and the contents were heated to 70°C. Polymerization was effected while stirring for 60 minutes. Subsequently, 1,90 mmol of 2,2,4-trimethyl-[1,4,2]oxazasilane were added to cap the anionic ends of the polymer chains, the rubber solution was discharged and stabilized by addition of 0,5 phr of Irganox® 1520 (2,4-bis(octylthiomethyl)-6-methylphenol). The rubber was isolated by precipitation in ethanol and was dried at 65°C under reduced pressure.

$$ML(1+4)100^\circ\ C = 51{,}9\ MU$$

Microstructure: 59,9 wt-% vinyl; 8,4 wt- % 1,4 cis; 8,4 wt-% 1,4 trans; 23,3 wt-% styrene

Phosphorus (ICP-OES): 87 %.

Example polymer SBR 5: Synthesis of alpha-functionalized, styrene-butadiene-SDPP terpolymer

An inertized 2 L reactor was charged with 850 g of hexane, 112,5 g of 1,3-butadiene, 37,5 g of styrene, 1,5 g of styryl(diphenyl)phosphine, 7,22 mmol of 2-(2-ethoxyethoxy)-2-methylpropane (BEE), 1,90 mmol of 4-methyl piperidine and 1,90 mmol of butyllithium, and the contents were heated to 70°C. Polymerization was effected while stirring for 60 minutes. Subsequently, 1,90 mmol of n-octanol were added to cap the anionic ends of the polymer chains, the rubber solution was discharged and stabilized by addition of 0,5 phr of Irganox® 1520 (2,4-bis(octylthiomethyl)-6-methylphenol). The rubber was isolated by precipitation in ethanol and was dried at 65°C under reduced pressure.

$$ML(1+4)100^\circ\ C = 40{,}9\ MU$$

Microstructure: 60,3 wt-% vinyl; 9,8 wt- % 1,4 cis; 11,6 wt-% 1,4 trans; 18,3 wt-% styrene

Phosphorus (ICP-OES): 91 %.

Example polymer SBR 6: Synthesis of alpha-functionalized and omega-functionalized, styrene-butadiene-SDPP terpolymer

An inertized 2 L reactor was charged with 850 g of hexane, 112,5 g of 1,3-butadiene, 37,5 g of styrene, 1,5 g of styryl(diphenyl)phosphine, 7,22 mmol of 2-(2-ethoxyethoxy)-2-methylpropane (BEE), 1,90 mmol of 4-methyl piperidine and 1,90 mmol of butyllithium, and the contents were heated to 70°C. Polymerization was effected while stirring for 60 minutes. Subsequently, 1,90 mmol of 2,2,4-trimethyl-[1,4,2]oxazasilane were added to cap the anionic ends of the polymer chains, the rubber solution was discharged and stabilized by addition of 0,5 phr of Irganox® 1520 (2,4-bis(octylthiomethyl)-6-methylphenol). The rubber was isolated by precipitation in ethanol and was dried at 65°C under reduced pressure.

$$ML(1+4)100^\circ\ C = 42{,}5\ MU$$

Microstructure: 57,3 wt-% vinyl; 9,6 wt- % 1,4 cis; 11,2 wt-% 1,4 trans; 21,9 wt-% styrene

Phosphorus (ICP-OES): 82 %.

Following substances were used in the compounds:

| Tradename | Producer |
|---|---|
| BUNA® CB 24 (Nd-Polybutadiene) | Lanxess Deutschland GmbH |
| Zeosil 1165MP (silica) | Solvay GmbH |
| VIVATEC® 500 (TDAE oil) | Hansen und Rosenthal KG |
| EDENOR® C 18 98-100 (stearic acid) | Caldic Deutschland GmbH |
| VULKANOX® 4020 LG (stabilizer) | Lanxess Deutschland GmbH |
| RHENOGRAN® ZNO-80 (ZnO) | Lanxess Deutschland GmbH |
| VULKANOX® HS/LG (stabilizer) | Lanxess Deutschland GmbH |
| RHENOGRAN® CBS-80 (accelerator) | Lanxess Deutschland GmbH |
| RHENOGRAN® IS 90-65 (sulfur) | Lanxess Deutschland GmbH |
| ANTILUX® 654 (ozone protection) | Lanxess Deutschland GmbH |
| SI 266 (silane) | Evonik Industries AG |

Compound recipe for a silica tread compound

| | Example 1 reference | Example 2 | Example 3 | Example 4 | Example 5 | Example 6 |
|---|---|---|---|---|---|---|
| BUNA CB 24 | 30 | 30 | 30 | 30 | 30 | 30 |
| ZEOSIL 1165MP | 90 | 90 | 90 | 90 | 90 | 90 |
| VIVATEC 500 | 33 | 33 | 33 | 33 | 33 | 33 |
| AFLUX 37 | 2 | 2 | 2 | 2 | 2 | 2 |
| EDENOR C18-98 MY | 1 | 1 | 1 | 1 | 1 | 1 |
| VULKANOX 4020/LG | 1 | 1 | 1 | 1 | 1 | 1 |
| VULKANOX HS/LG | 1 | 1 | 1 | 1 | 1 | 1 |
| SBR 1 | 70 | | | | | |
| SBR 2 | | 70 | | | | |
| SBR 3 | | | 70 | | | |

(continued)

| | Example 1 reference | Example 2 | Example 3 | Example 4 | Example 5 | Example 6 |
|---|---|---|---|---|---|---|
| SBR 4 | | | | 70 | | |
| SBR 5 | | | | | 70 | |
| SBR 6 | | | | | | 70 |
| ANTI LUX 654 | 1 | 1 | 1 | 1 | 1 | 1 |
| SI 266 | 6,6 | 6,6 | 6,6 | 6,6 | 6,6 | 6,6 |
| RHENOGRAN CBS-80 | 2 | 2 | 2 | 2 | 2 | 2 |
| RHENOGRAN IS 90-65 | 3,4 | 3,4 | 3,4 | 3,4 | 3,4 | 3,4 |
| RHENOGRAN DPG-80 | 1,49 | 1,49 | 1,49 | 1,49 | 1,49 | 1,49 |
| RHENOGRAN ZNO-80 | 3,8 | 3,8 | 3,8 | 3,8 | 3,8 | 3,8 |

Mixing protocol

| | | |
|---|---|---|
| Step 1 | mixer | |
| | 0 sec | addition of polymers |
| | 30 sec | addition of 2/3 of filler, silane, stearic acid, oil and |
| | 90 sec | addition of 1/3 of filler, silane, stearic acid, oil |
| | 150 sec | addition of ZnO |
| | 210 sec | heating to silanization temperature (150° C) |
| | 390 sec | stop |
| Step 2 | milling | at 40° C, nip of 4 mm |
| | | Cut sheet threetimes left and right, continue with three endwise passes |
| Step 3 | storage | for 24 hours at 23° C |
| Step 4 | mixer | |
| | 0 sec | addition of rubber sheet and heating to 150° C |
| | 210 sec | stop |
| Step 5 | Milling | at 40° C, nip of 4 mm |
| | | addition of sulphur and accelerator, cut sheet threetimes left and right, continue with three endwise passes |

Comparative results for the compounded materials and vulcanizates

| | | Example 1 reference | Example 2 | Example 3 | Example 4 | Example 5 | Example 6 |
|---|---|---|---|---|---|---|---|
| Compound Mooney Visc. | | | | | | | |
| ML (1+4)100° C | ME | 76,4 | 82,63 | 86,57 | 70,22 | 72,67 | 74,34 |
| | | | | | | | |
| Dynamic damping, 10 Hz, Temp. Sweep | | | | | | | |
| tan d (0°C) | | 0,477 | 0,696 | 0,727 | 0,783 | 0,61 | 0,641 |
| tan d (60 °C) | | 0,13 | 0,119 | 0,106 | 0,13 | 0,13 | 0,116 |
| | | | | | | | |
| Rebound @ 60° C | % | 51 | 52,5 | 54,5 | 53,5 | 55,5 | 54 |
| Rebound @ 23° C | % | 28,33 | 19,87 | 19,93 | 18,87 | 28,73 | 26,33 |
| Re@60°C - Re@23° C | % | 22,67 | 32,63 | 34,57 | 34,63 | 26,77 | 27,67 |
| Hardness @ 23° C | Shore A | 61 | 62 | 65 | 60 | 56 | 58 |
| | | | | | | | |
| MTS 1 Hz, 60° C, Ampl. Sweep | | | | | | | |
| tan d (max.) | | 0,204 | 0,183 | 0,163 | 0,2 | 0,195 | 0,187 |
| G' (0,5%) | MPa | 2,33 | 1,83 | 1,78 | 1,81 | 1,67 | 1,6 |
| G' (15%) | MPa | 1,18 | 1,15 | 1,23 | 1,16 | 1,07 | 1,05 |
| G' (0,5%) - G' (15%) | | 1,15 | 0,68 | 0,55 | 0,65 | 0,6 | 0,55 |
| | | | | | | | |
| Tensile strain @ 23° C | | | | | | | |
| S100 | MPa | 1,9 | 2,7 | 3,5 | 2,6 | 2,1 | 2,3 |
| S300 | MPa | 10,8 | 15,7 | - | 14,9 | 12,5 | 13,8 |

Various tests were run on the reference compound with SBR1 and the innovative example compounds including SBR 2, SBR 3, SBR 4, SBR 5, SBR 6 and on the corresponding vulcanizates to ascertain the final properties. The compound recipe is understood as a standard composition for a silica tire tread, but the application of the innovative rubbers are not limited to these types of compounds. The innovative examples do not strongly differ from the compound Mooney viscosity obtained for the reference material which in generally points on a similar processability behavior and allows for direct comparison of performance relevant measurements

Dynamic damping measurements (temperature sweep mode) allows for the prediction of wet grip, which is generally indicated by a high tan delta at 0° C and for rolling resistance which is described by low tan delta at 60° C. The incorporation of SDPP to the SSBR strongly increases tan delta 0° C and reduces in turn the tan delta 60° C as can be seen from the comparison of the reference compound example 1 to the innovative example 2 and 3. Further, it can be seen that combinations of SDPP incorporation with end-group functionalization, both at the alpha or omega position or both, allow for additional improvement of the respective performance indicator (example 4,5,6).

MTS amplitude sweep measurements at 60° C allow for additional investigation of rolling resistance represented by the tan delta maximum value. These measurements confirm the observation of the temperature sweep measured. Further, MTS amplitude sweep measurements allow for characterization of the filler distribution, represented by a lower difference of G' at low and G' at high amplitude (G'(0.5%) - G'(15%); so-called Payne effect). A strong decrease in Payne was observed for the SDPP-incorporated SSBR compounds example 2 and 3. Further, the combination of SDPP containing SSBR with end-functionalization technologies allow for additional reduction of filler-filler interactions due to increased rubber-filler interactions.

A third measurement which is widely known to describe rolling resistance of a tire is the rebound measured at 60° C. These measurements further confirm the tan delta measurements from amplitude and temperature sweep measurements. A low value for the rebound measured at 23° C, in contrast, is a measurement describing wet grip. This means in turn that that difference of the Rebound 60° C and the Rebound 23° C should be ideally high since this confirms an improved balance between rolling resistance and wet grip. Comparing the reference compound to the all innovative compounds 2 - 6, it can be seen that the innovative, SDPP containing SSBRs result in a significant inclination of these two rebound values.

Tensile measurements at 23 °C were performed on these vulcanizates. By applying the innovative, SDPP containing SSBRs to the compound, the stress at 300 % of deformation is strongly increased. In case of example 3, the elongation at break was below the 300 %. As can be seen from the S100%, for this compound the modulus was already significantly increased at low deformations. The combinations of the SDPP technology with end-functionalization chemistry resulted in a minor decrease for the modulus at 300 % of deformation, but are still significantly higher than for the reference vulcanizate example 1.

The data presented confirm that the application of an SDPP containing SSBR results in significant improvement of tire performance and further confirm the these technology can be combined with alpha-functionalization or end-functionalization or alpha- and end-functionalization.

## Claims

**1.** A polymer, comprising:

repeating monomeric units of at least one diene and at least one phosphine or phosphonium containing monomeric unit according to the formulae B1, B2, and/or B3:

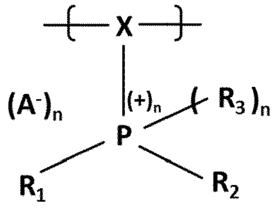
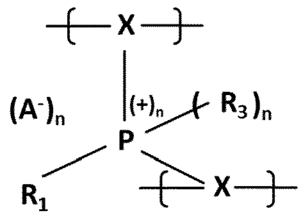
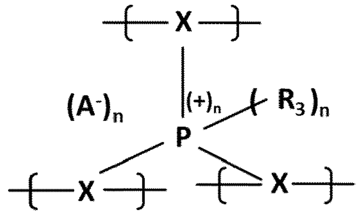

B1 B2 B3

where per formula B1:
n = 0 or 1, and
when n = 0, then

$R^1$, $R^2$ are the same or different and are each an H, a linear and branched alkyl, aryl especially phenyl and alkylated phenyl, benzyl, cycloalkoxy, aryloxy, alkaryloxy, aralkyl or aralkoxy radical which may contain one or more heteratoms, preferably O, N, S or Si
X is the polymerized form of allyl, styryl, methyl styryl, 1,3-pentadienyl, 2-methylene buta-1,3-diene, 1,3-hexadienyl, or mixtures thereof, and

when n = 1, then

$R^1$, $R^2$ are as above,
$R^3$ is H, linear and branched alkyl, aryl preferably phenyl and alkylated phenyl, benzyl, polybutadienyl, polyisoprenyl, polyacryl,
X is the polymerized form of a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si, and

$A^-$ is $F^-$, $Cl^-$, $Br^-$, $J^-$, $OH^-$, $SH^-$, $BF_4^-$ ,1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$,

where per formula B2:
n = 0 or 1, and

$R^1$ is are the same or different and are each an H, a linear and branched alkyl, aryl especially phenyl and alkylated phenyl, benzyl, cycloalkoxy, aryloxy, alkaryloxy, aralkyl or aralkoxy radical which may contain one or more heteratoms, preferably O, N, S or Si,
$R^3$ is H, linear and branched alkyl, aryl preferably phenyl and alkylated phenyl, benzyl, polybutadienyl, polyisoprenyl, polyacryl
X is the polymerized form of a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si, and
$A^-$ is $F^-$, $Cl^-$, $Br^-$, J-, OH-, $SH^-$, $BF_4^-$, 1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$,

where per formula B3:
n = 0 or 1, and

$R^3$ is H, linear and branched alkyl, aryl preferably phenyl and alkylated phenyl, benzyl, polybutadienyl, polyisoprenyl, polyacryl
X is the polymerized form of a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si, and
$A^-$ is $F^-$, $Cl^-$, $Br^-$, $J^-$, $OH^-$, $SH^-$, $BF_4^-$, 1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$.

**2.** The polymer according to claim 1, further comprising repeating monomeric units of a vinylaromatic compound, preferably styrene.

**3.** The polymer according to claim 1 or claim 2, wherein the diene is butadiene or isoprene, preferably butadiene.

**4.** The polymer according to any of claims 1 to 3, wherein the polymer has a number-average molecular weight, $M_n$, from 10 000 to 2 000 000 g/mol, preferably from 100 000 to 1 000 000 g/mol.

**5.** The polymer according to any of claims 1 to 4, wherein the polymer has a glass transition temperature of from -110°C to +20°C, preferably from -110°C to 0°C.

**6.** The polymer according to any of claims 1 to 5, wherein said polymer further is end chain functionalized thereby comprises one or more end-chain functional groups.

**7.** The polymers according to Claim 6 wherein said end chain functional groups are selected from the group consisting of silane-containing carbinol groups of the formula

(I)

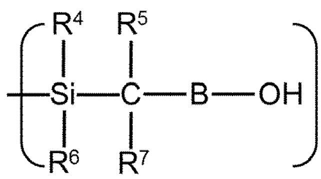

(I)

or
their metal salts according to the formula (II):

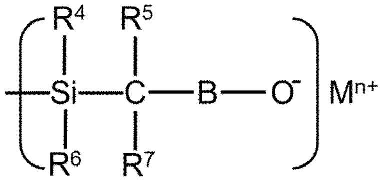

(II)

where

$R^4$, $R^5$, $R^6$, $R^7$ are identical or different and are H, alkyl moieties, cycloalkyl moieties, aryl moieties, alkaryl moieties and aralkyl moieties, where these can comprise heteroatoms such as O, N, S, Si,
B is a divalent organic moiety which can comprise, in addition to C and H, heteroatoms such as O, N, S, Si,
n is an integer from 1 to 4,
M is a metal or semimetal of valency from 1 to 4, preferably Li, Na, K, Mg, Ca, Fe, Co, Ni, Al, Nd, Ti, Si, Sn.

**8.** A vulcanizable rubber composition, comprising:

a polymer according to any of claims 1 to 7, a rubber, optionally a filler, preferably in an amount of 10 to 500 parts by weight, more preferably 20 to 150 parts by weight,
optionally a coupling agent, preferably in an amount of 0.1 to 30 parts by weight, more preferably 1 to 20 parts by weight and
at least one crosslinking system comprising at least one crosslinker and optionally one or more crosslinking accelerators,
wherein said parts by weight are based in each case on 100 parts by weight of the sum of the polymer according to any of claims 1 to 7 and the rubber.

**9.** The vulcanizable rubber composition according to claim 8,
wherein said filler is a silica based filler, and
said coupling agent is a sulphur-containing-silane comprising a sulfane moiety and having a molar ratio of sulfur to silicium of less than 1.35 : 1, more preferably less than 1.175 : 1.

**10.** The vulcanizable rubber composition according to claim 9, wherein the coupling agent is selected from the group consisting of bis[3-(triethoxysilyl)propyl]monosulfane, bis[3(triethoxysilyl)propyl]disulfane, bis[3-(triethoxysilyl)propyl]trisulfane, bis[3(triethoxysilyl)propyl]tetrasulfane), and mixtures thereof.

**11.** A process for producing vulcanizates, comprising:

vulcanizing the vulcanizable rubber composition according to any of claims 8 to 10.

**12.** The process according to claim 11, wherein said vulcanizing step is performed at a temperature in the range from 100°C to 200°C, preferably from 120°C to 190°C.

**13.** Vulcanizates obtained by the process according to any of claims 11 to 12.

**14.** The vulcanizates according to claim 13, wherein said vulcanizates are shaped in the form of shaped bodies, more preferably in the form of a drive belt, of roller coverings, of a seal, of a cap, of a stopper, of a hose, of floor covering, of sealing mats or sheets, profiles or membranes, tires, tire treads, or layers thereof.

**15.** A process for forming a polymer, comprising the steps of:

polymerizing
at least one diene and
at least one phosphine or phosphonium containing monomer according to the formulae A1, A2, and/or A3

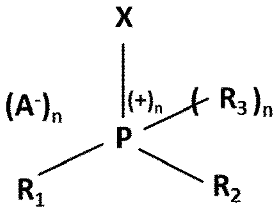 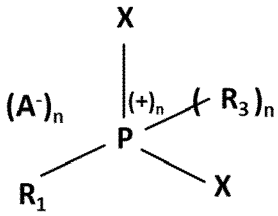 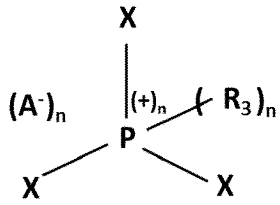

A1 A2 A3

where per formula A1,
n = 0 or 1, and
when n = 0, then

> $R^1$, $R^2$ are the same or different and are each an H, a linear and branched alkyl, aryl especially phenyl and alkylated phenyl, benzyl, cycloalkoxy, aryloxy, alkaryloxy, aralkyl or aralkoxy radical which may contain one or more heteratoms, preferably O, N, S or Si
> X is allyl, styryl, methyl styryl, 1,3-pentadienyl, 2-methylene buta-1,3-diene, 1,3-hexadienyl, or mixtures thereof, and

when n = 1, then

> $R^1$, $R^2$ are as above,
> $R^3$ is H, linear and branched alkyl, aryl preferably phenyl and alkylated phenyl, benzyl, polybutadienyl, polyisoprenyl, polyacryl,
> X is a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si, and
> $A^-$ is $F^-$, $Cl^-$, $Br^-$, J-, OH-, $SH^-$, $BF_4^-$, 1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$, and

where per formula A2:
n = 0 or 1, and

> $R^1$ is are the same or different and are each an H, a linear and branched alkyl, aryl especially phenyl and alkylated phenyl, benzyl, cycloalkoxy, aryloxy, alkaryloxy, aralkyl or aralkoxy radical which may contain one or more heteratoms, preferably O, N, S or Si,
> $R^3$ is H, linear and branched alkyl, aryl preferably phenyl and alkylated phenyl, benzyl, polybutadienyl, polyisoprenyl, polyacryl
> X is a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si,
> $A^-$ is $F^-$, $Cl^-$, $Br^-$, $J^-$, $OH^-$, $SH^-$, $BF_4^-$, 1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$, and

where for formula A3:
n = 0 or 1, and

> $R^3$ is H, linear and branched alkyl, aryl preferably phenyl and alkylated phenyl, benzyl, polybutadienyl, polyisoprenyl, polyacryl
> X is a vinyl, allyl, styryl, methyl styryl, 1,3-pentadienyl, 2-methylene buta-1,3-diene, 1,3-hexadienyl and mixtures thereof$R^3$ are the same or different and are each an H, alkyl, alkoxy, cycloalkyl, cycloalkoxy,

aryl, aryloxy, alkaryl, alkaryloxy, aralkyl or aralkoxy radical which may contain one or more heteroatoms, preferably O, N, S or Si, and
$A^-$ is $F^-$, $Cl^-$, $Br^-$, $J^-$, $OH^-$, $SH^-$, $BF_4^-$, 1/2 $SO_4^{2-}$, $HSO_4^-$, $HSO_3^-$, $NO_2^-$, $NO_3^-$, carboxylate R-C(O)O-, dialkyl phosphate $(RO)_2P(O)O^-$, dialkyl dithiophosphate $(RO)_2P(S)S^-$, dialkyl phosphorothioate $(RO)_2P(S)O^-$.

**16.** The process according to claim 15, wherein said polymerization is performed in the presence of a further monomer, preferably a vinylaromatic compound, more preferably styrene.

**17.** The process according to claim 15 or claim 16, wherein the diene is butadiene or isoprene, preferably butadiene.

**18.** The process according to any of claims 15 to 17, wherein the at least one monomer according to the formula A1, A2, and A3 is styryl(diphenyl)phosphine and/or its corresponding alkyl-phosphonium salt

**19.** The process according to any of claims 15 to 18, reacting the polymer with one or more end-chain functionalizing reagents whereby one or more functional groups are bonded to the polymer at its terminal chain ends, preferably wherein said end-chain functionalizing reagents contain one or more heteroatoms, preferably O, N, S, Si or Sn, particularly preferred wherein said end-chain functionalizing reagents are 1-oxa-2-silacycloalkanes, preferably 2,2-dimethyl-1-oxa-2-silacyclohexane, 2,2-diethyl-1-oxa-2-silacyclohexane, 2,2-dipropyl-1-oxa-2-silacyclohexane, 2-methyl-2-phenyl-1-oxa-2-silacyclohexane, 2,2-diphenyl-1-oxa-2-silacyclohexane, 2,2,5,5-tetramethyl-1-oxa-2-silacyclohexane, 2,2,3-trimethyl-1-oxa-2-silacyclohexane, 2,2-dimethyl-1-oxa-2-silacyclopentane, 2,2,4-trimethyl-1-oxa-2-silacyclopentane, 2,2-dimethyl-1,4-dioxa-2-silacyclohexane, 2,2,5,5-tetramethyl-1,4-dioxa-2,5-disilacyclohexane, 2,2,4-trimethyl-[1,4,2]oxazasilinane, benzo-2,2-dimethyl-1,4-dioxa-2-silacyclohexane, benzo-2,2,4-trimethyl-1-oxa-4-aza-2-silacyclohexane and mixtures thereof.

**20.** The product obtained according the process according to any of claims 15 to 19.

Europäisches Patentamt
European Patent Office
Office européen des brevets

# EUROPEAN SEARCH REPORT

Application Number
EP 17 15 7801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALISON R SCHULTZ ET AL: "Living anionic polymerization of 4-diphenylphosphino styrene for ABC triblock copolymers : Synthesis of poly(S- b -I- b -DPPS) triblock copolymers", POLYMER INTERNATIONAL, vol. 66, no. 1, 12 September 2016 (2016-09-12), pages 52-58, XP055390497, GB ISSN: 0959-8103, DOI: 10.1002/pi.5253 * Experimental * * Scheme 1 * * table 1 * ----- | 1-6, 15-20 | INV. C08F212/14 C08F236/06 C08F230/02 C08C19/25 C08F2/38 C08L9/00 |
| X | US 2017/029704 A1 (BODAY DYLAN J [US] ET AL) 2 February 2017 (2017-02-02) * figure 2 * ----- | 1-3, 15-18,20 | |
| X | US 3 624 057 A (FARRAR RALPH C) 30 November 1971 (1971-11-30) * claims; example II * ----- | 1-3, 15-17,20 | TECHNICAL FIELDS SEARCHED (IPC) |
| A | WO 2014/173706 A1 (LANXESS DEUTSCHLAND GMBH [DE]) 30 October 2014 (2014-10-30) * the whole document * ----- | 1-20 | C08F C08C C08L |
| A,D | WO 2013/166124 A1 (BRIDGESTONE CORP [JP]; HOGAN TERRENCE E [US]; HERGENROTHER WILLIAM L [] 7 November 2013 (2013-11-07) * paragraph [0018] - paragraph [0026] * * Sample 2; page 42 * ----- | 1-20 | |

The present search report has been drawn up for all claims

1

| Place of search | Date of completion of the search | Examiner |
|---|---|---|
| Munich | 13 July 2017 | Friebe, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 15 7801

This annex lists the patent family members relating to the patent documents cited in the above-mentioned European search report. The members are as contained in the European Patent Office EDP file on The European Patent Office is in no way liable for these particulars which are merely given for the purpose of information.

13-07-2017

| Patent document cited in search report | Publication date | Patent family member(s) | Publication date |
|---|---|---|---|
| US 2017029704 A1 | 02-02-2017 | US 9540568 B1 | 10-01-2017 |
| | | US 2017029616 A1 | 02-02-2017 |
| US 3624057 A | 30-11-1971 | BE 745220 A1 | 30-07-1970 |
| | | DE 2004282 A1 | 08-10-1970 |
| | | FR 2030211 A1 | 30-10-1970 |
| | | GB 1302012 A | 04-01-1973 |
| | | JP S5146793 B1 | 10-12-1976 |
| | | US 3624057 A | 30-11-1971 |
| WO 2014173706 A1 | 30-10-2014 | CN 105164163 A | 16-12-2015 |
| | | EP 2796471 A1 | 29-10-2014 |
| | | EP 2989129 A1 | 02-03-2016 |
| | | ES 2623628 T3 | 11-07-2017 |
| | | HK 1222187 A1 | 23-06-2017 |
| | | JP 2016518492 A | 23-06-2016 |
| | | KR 20160018494 A | 17-02-2016 |
| | | RU 2015150052 A | 29-05-2017 |
| | | SG 11201508109P A | 27-11-2015 |
| | | TW 201504322 A | 01-02-2015 |
| | | US 2016075809 A1 | 17-03-2016 |
| | | WO 2014173706 A1 | 30-10-2014 |
| WO 2013166124 A1 | 07-11-2013 | CN 104364275 A | 18-02-2015 |
| | | EP 2844678 A1 | 11-03-2015 |
| | | JP 2015516014 A | 04-06-2015 |
| | | KR 20150013219 A | 04-02-2015 |
| | | SG 11201407010R A | 27-11-2014 |
| | | US 2015126675 A1 | 07-05-2015 |
| | | WO 2013166124 A1 | 07-11-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0180141 A1
- EP 0864606 A1
- US 4417029 A
- EP 0513217 A1
- EP 0675140 A1
- US 20080308204 A1
- US 5792820 A
- EP 0590490 A1
- EP 0594107 A1
- WO 2013166124 A1
- WO 0134658 A
- US 6992147 A
- EP 0513217 B1
- EP 0675140 B1
- EP 0590490 B1
- EP 0594107 B1
- US 4906706 A


### Non-patent literature cited in the description


- *Chem. Rev.,* 1995, vol. 95, 381-398
- **I. FRANTA.** Elastomers and Rubber Compounding Materials. Elsevier, 1989, 113-131
- **HOUBEN-WEYL.** Methoden der Organischen Chemie. Thieme Verlag, 1961, vol. XIV/1, 645-673
- METHODEN DER ORGANISCHEN CHEMIE. 1987, vol. E 20, 114-134, 134-153
- Comprehensive Polymer Science. Pergamon Press Ltd, 1989, vol. 4, 53-108